# FASCICULE DE BREVET EUROPEEN

(11) **EP 4 037 937 B1**
(45) Date de publication et mention de la délivrance du brevet: **30.07.2025**
(21) Numéro de dépôt: 20775314.6
(22) Date de dépôt: 24.09.2020
(51) Int. Cl.: B60Q 1/14, B60Q 11/00, G01M 11/06, H05B 45/10, H05B 47/17, H05B 47/155

(54) **PROCÉDÉ DE GÉNÉRATION D'UNE CONSIGNE D'ÉCLAIRAGE PAR DÉFAUT, SYSTÈME D'ÉCLAIRAGE, PROGRAMME D'ORDINATEUR**
VERFAHREN ZUR ERZEUGUNG EINES STANDARDBELEUCHTUNGSBEFEHLS, BELEUCHTUNGSSYSTEM, COMPUTERPROGRAMM
METHOD FOR GENERATING A DEFAULT LIGHTING INSTRUCTION, LIGHTING SYSTEM, COMPUTER PROGRAM

(30) Priorité: 27.09.2019 FR 1910734
(43) Date de publication de la demande: 10.08.2022
(73) Titulaire: VALEO VISION, 93012 Bobigny Cedex (FR)
(72) Inventeur: VOIRIN, Patrice, 93012 Bobigny Cedex (FR); YANG, Feng, 93012 Bobigny Cedex (FR); KOUKI, Houssem, 93012 Bobigny Cedex (FR); DONNAT, Eric, 93012 Bobigny Cedex (FR); CARBONELL, Rodrigo, 93012 Bobigny Cedex (FR)
(74) Mandataire: Valeo Visibility
(86) Numéro de dépôt international: PCT/EP2020/076637
(87) Numéro de publication internationale: WO 2021/058609

(56) Documents cités:
- FR-A1- 3 055 980
- FR-A1- 3 072 531
- US-A1- 2019 200 427
- US-A1- 2019 268 071

## Description

L'invention se rapporte aux modules d'éclairage pour véhicules automobiles. En particulier, l'invention se rapporte à de tels modules impliquant des sources lumineuses matricielles.

Une diode électroluminescente, LED, est un composant électronique semi-conducteur capable d'émettre de la lumière lorsqu'il est parcouru par un courant électrique ayant au moins une intensité seuil. Dans le domaine automobile, on a de plus en plus recours à la technologie LED pour diverses solutions de signalisation lumineuse. Des matrices de LED sont particulièrement intéressantes dans le domaine de l'éclairage automobile. Des sources lumineuses matricielles peuvent être utilisées pour des fonctions de type « levelling », i.e., ajustement de la hauteur du faisceau lumineux émis, en fonction de l'assiette du véhicule et du profil de la route. D'autres applications comprennent le DBL (« Digital Bending Light ») ce qui correspond à l'ajustement de la direction du faisceau lumineux émis, pour suivre la route dans le plan horizontal, l'ADB (« Adaptive Driving Beam ») qui correspond à une fonction anti-éblouissement qui génère des zones d'ombre dans le faisceau lumineux émis par un feu de route pour ne pas gêner d'autres usagers de la route, mais aussi des fonctions de projection de motifs au sol utilisant le faisceau lumineux pixelisé.

Il est connu d'utiliser des sources lumineuses de différents types de technologies pour les applications d'éclairage citées. Il s'agit par exemple de la technologie monolithique, suivant laquelle une pluralité importante de sources élémentaires de type LED, équivalentes à des pixels, sont gravées dans un substrat semi-conducteur commun. Des connexions électriques intégrées permettent d'activer les pixels indépendamment les uns des autres. Une autre technologie connue est celle des microLED, qui engendre une matrice de LEDs de faibles dimensions, typiquement inférieures à 150µm. Il existe aussi des modules de type à micro-miroirs, DMD (« Digital Micro-Mirror Device »), qui impliquent une technologie de projection utilisant un modulateur d'intensité sur un faisceau uniforme. Des micro-miroirs, dont la position est commandée moyennant des éléments piézo-électriques, sont orientés de manière à réfléchir sélectivement un faisceau lumineux incident, de manière à ce que chaque micro-miroir corresponde à une source élémentaire de la matrice de pixels ainsi générée. La lumière issue d'une source est dirigée sur la matrice de micro-miroirs par une optique. Cette lumière a donc une distribution variable d'un module à l'autre, à cause du positionnement et des tolérances de fabrication de l'optique et de la source de lumière. Ceci engendre une intensité maximale variable d'un module à l'autre, pour un pixel donné. Dans ce cas chaque pixel aura une intensité maximale différente en fonction de la commande qui lui est transmise. De tels dispositifs d'éclairage sont conçus par des méthodes de production de masse. Il existe obligatoirement un jeu entre les éléments constitutifs du dispositif d'éclairage et/ou de signalisation d'une part pour permettre un assemblage aisé, et d'autre part parce que les pièces ne sont généralement pas usinées mais plutôt moulées en plastique, ce qui permet de réduire les coûts de production.

Il faut souligner, en particulier, la difficulté à aligner parfaitement une matrice à micro-miroirs avec la partie optique de projection, qui comprend généralement au moins une lentille. Du fait de la grande ouverture numérique de l'objectif utilisé pour la fonction de projection, la qualité de projection de l'image se dégrade significativement dès que le décalage latéral de l'axe optique atteint quelques micromètres. En pratique des déformations de l'image projetées sont donc inévitables en utilisant des solutions connues dans l'art. Chaque module de projection de ce type a un jeu de caractéristiques optiques qui lui est propre, notamment des caractéristiques d'aberrations géométriques, dont des propriétés de distorsion optique et d'aberration sphérique. Lors de la production de micro-miroirs, des aberrations géométriques peuvent être introduites. Tous ces éléments résultent dans un comportement non-homogène de la source lumineuse matricielle.

Tous ces modules précités ont des caractéristiques propres liées à la combinaison des tolérances de fabrication des composants. Lors de la production de composants semi-conducteurs tels que des LEDs ou des matrices de LEDs, des variations de de courant direct sont à ce jour inévitables. Il s'ensuit que dans une matrice de LEDs donnée, à courant de charge égale, les LEDs émettent des faisceaux lumineux d'intensités variables, non-homogènes. Alors qu'il est possible de corriger des consignes de projection afin de tenir compte des spécificités électroniques et/ou optiques d'un module d'éclairage, lorsqu'un défaut intervient au niveau du module lumineux, il est important de pouvoir néanmoins projeter une image par défaut qui manque d'éblouir les autres usagers de la route.

Il est connu de la publication de demande de brevet français FR3072531, ainsi que de la publication de demande de brevet français FR3055980, des procédés de mise en œuvre d'un module d'éclairage doté d'une source lumineuse matricielle permettant de tenir compte de variabilités et/ou d'aberrations géométriques. Ces procédés ne permettent cependant pas la génération d'une consigne d'éclairage par défaut tenant compte de ces variabilités.

L'invention a pour objectif de pallier à au moins un des problèmes posés par l'art antérieur. Plus précisément, l'invention a pour objectif de proposer un module d'éclairage ainsi qu'un procédé de commande qui permettent de calibrer le comportement lumineux et /ou géométrique des sources lumineuses élémentaires regroupées dans une source lumineuse matricielle d'un véhicule automobile lorsqu'une défaillance est détectée. Le but est de se donner les moyens de produire un faisceau lumineux homogène et conforme à une consigne prédéterminée, indépendamment de l'instance de la source lumineuse matricielle implantée dans le module d'éclairage.

Selon un premier aspect de l'invention, un procédé de génération d'une consigne d'éclairage par défaut d'un module d'éclairage pour un véhicule automobile est proposé. Le module d'éclairage comprend une source lumineuse matricielle regroupant une pluralité de sources lumineuses élémentaires, une unité de réception et d'envoi de données pour recevoir/envoyer des données d'un/à un module de commande du véhicule automobile. Le module de commande comprend des premières données relatives au véhicule automobile. Le module d'éclairage comprend en outre une unité de commande destinée à commander ladite source lumineuse matricielle, et un élément de mémoire comprenant des secondes données de calibration relatives à ladite source lumineuse matricielle. Le procédé est remarquable en ce que la consigne par défaut est destinée à servir de commande à la source lumineuse matricielle en cas de défaillance de la communication entre le module de commande 20 du véhicule automobile et le module d'éclairage 100, et en ce qu'il comprend les étapes de
a) calculer, moyennant une unité de calcul, une consigne d'éclairage par défaut, en utilisant au moins une partie desdites premières données et au moins une partie desdites secondes données ;
b) enregistrer la consigne d'éclairage par défaut dans un élément de mémoire du module d'éclairage.

De préférence, le procédé peut comprendre l'étape préliminaire d'envoyer au moins une partie des secondes données de calibration moyennant l'unité d'envoi de connées au module de commande du véhicule automobile. De préférence, l'unité de calcul peut faire partie dudit module de commande et le procédé peut préférentiellement comprendre en outre avant l'étape b) la transmission de la consigne d'éclairage par défaut du module de commande au module d'éclairage.

Le procédé peut de préférence comprendre l'étape d'enregistrer, au niveau du module de commande, les secondes données de calibration reçues dans un élément de mémoire, afin de les réutiliser ultérieurement.

De préférence, le procédé peut comprendre une étape ultérieure d'envoi d'une consigne d'éclairage du module de commande au module d'éclairage, la consigne d'éclairage transmise prenant en compte lesdites données de calibration.

De préférence, le procédé peut comprendre l'étape préliminaire de recevoir au moins une partie des premières données relatives au véhicule automobile moyennant l'unité de réception de données depuis le module de commande du véhicule automobile. L'unité de calcul peut de préférence faire partie dudit module d'éclairage.

Le procédé peut de préférence comprendre une étape ultérieure de réception d'une consigne d'éclairage de la part du module de commande au niveau du module d'éclairage, et une étape de commander, moyennant l'unité de commande du module d'éclairage, la source lumineuse matricielle en fonction de ladite consigne d'éclairage et des données de calibration stockées dans l'élément de mémoire du module.

De préférence, le procédé peut comprendre une étape de correction de la consigne d'éclairage reçue, en utilisant les données de calibration stockées dans l'élément de mémoire du module d'éclairage.

Le procédé peut préférentiellement comprendre une étape ultérieure de détection, moyennant une unité de détection, d'un défaut au niveau du module de commande et/ou au niveau du module d'éclairage, et de commande de la source matricielle par la suite en utilisant ladite consigne par défaut.

Les premières données relatives au véhicule automobile peuvent préférentiellement comprendre des données qui décrivent l'assiette, la position du module d'éclairage, la position d'autres modules d'éclairage, ou une combinaison de ce qui précède.

Les secondes données de calibration peuvent de préférence comprendre pour chaque source élémentaire une indication de l'intensité lumineuse émise en fonction d'un courant électrique de charge, une indication d'une aberration géométrique d'un faisceau lumineux que le module d'éclairage est apte à émettre, ou une combinaison de ce qui précède.

Da manière préférée, la consigne d'éclairage par défaut peut comprendre une image qui représente une coupure de feu de croisement.

De préférence, ladite consigne d'éclairage peut comprendre une consigne élémentaire par source lumineuse élémentaire.

Ladite consigne d'éclairage peut préférentiellement comprendre une image. De préférence, au moins un pixel de l'image peut correspondre à une source lumineuse élémentaire. La résolution de l'image peut de préférence être supérieure à la résolution de projection de la source lumineuse matricielle. De préférence, un pixel de l'image peut correspondre à une source lumineuse élémentaire.

Au moins une partie des données échangées entre le module de commande du véhicule automobile et l'unité de commande du module d'éclairage peut préférentiellement être chiffrée et/ou signée moyennant au moins une clé cryptographique.

De préférence, une défaillance au niveau du module d'éclairage et/ou du module de commande du véhicule automobile peut être détectée lorsque le déchiffrage des données n'aboutit pas ou lorsque ladite signature ne peut pas être validée.

Selon un autre aspect de l'invention, un système d'éclairage pour un véhicule automobile est proposé. Le système est remarquable en ce qu'il comprend un module de commande d'un véhicule automobile, le module de commande comprenant des premières données relatives au véhicule automobile, le module de commande étant relié par un canal de données à un module d'éclairage qui comprend une unité de commande et une source lumineuse matricielle ainsi qu'un élément de mémoire comprenant des secondes données de calibration relatives à ladite source lumineuse matricielle. Le système est en outre remarquable en ce que le module de commande et le module d'éclairage sont configurés pour mettre en œuvre les étapes du procédé selon l'aspect précédent de l'invention.

Le module d'éclairage peut de préférence comprendre une unité de réception/d'envoi de données. L'unité de réception et d'envoi de données peut de préférence comprendre une interface réseau capable de recevoir/envoyer des données sur un bus de données interne au véhicule automobile. Par exemple, le bus peut être un bus Ethernet, un bus de type Gigabit Multimedia Serial Link, GMSL, ou un bus de technologie Low Voltage Differential Signaling, LVDS, comme un bus FPD-Link III.

L'unité de commande peut de préférence comprendre un élément microcontrôleur. L'unité de commande peut préférentiellement comprendre une puce de type « Field Programmable Gate Array », FPGA, « Application Specific Integrated Circuit », ASIC, ou « Complex Programmable Logic Device », CPLD. Ces éléments sont configurés moyennant un programme informatique approprié pour mettre en œuvre les fonctionnalités décrites.

La source lumineuse matricielle peut de préférence comprendre une source monolithique, comprenant des sources lumineuses élémentaires électroluminescentes à éléments semi-conducteurs gravées dans un substrat commun et activables indépendamment les unes des autres.

La source lumineuse matricielle peut de préférence comprendre une matrice de type micro LED, comprenant une matrice de sources élémentaires réalisées par des diodes électroluminescentes, LED, de faibles dimensions, typiquement inférieures à 150 µm.

La source lumineuse matricielle peut de préférence comprendre un dispositif à micro-miroirs, DMD, (« Digital micromirror device »), dans lequel une source élémentaire comprend un micro-miroir d'une matrice, qui réfléchit de manière sélective en fonction de sa position un faisceau de lumière incident.

L'unité de commande peut de préférence être configurée pour commander ladite source lumineuse matricielle en corrigeant ladite consigne d'éclairage moyennant au moins une partie desdites données de calibration.

De préférence, l'unité de commande peut être configurée pour transmettre au moins une partie desdites données de calibration à un module de commande du véhicule automobile.

Le module d'éclairage peut de préférence comprendre un deuxième élément de mémoire dans lequel des données permettant d'authentifier le module sont enregistrées. De préférence, le module d'éclairage peut comprendre un processeur programmé pour chiffrer et/ou signer des données moyennant une clé cryptographique enregistrée dans ledit élément de mémoire.

Un programme d'ordinateur comprenant une suite d'instructions est proposé, qui, lorsqu'elles sont exécutées par un processeur, conduisent le processeur à mettre en oeuvre un procédé selon un aspect de l'invention.

Un support de stockage non transitoire lisible par ordinateur est proposé, ledit support stockant un programme d'ordinateur selon le paragraphe précédent.

En utilisant les mesures proposées par la présente invention, il devient possible de proposer un procédé qui permet d'enregistrer une consigne d'éclairage par défaut dans un module d'éclairage, qui tient compte à la fois de données de calibration propres au module d'éclairage, et de données relatives au véhicule automobile qu'il équipe. Ces données comprennent par exemple l'assiette du véhicule automobile, ou la position du module d'éclairage par rapport à d'autres composants du véhicule automobile. Ces informations permettent de calibrer une image par défaut, représentant par exemple une coupure de feux de croisement, et de l'associer de manière physique au module d'éclairage. De préférence, ce procédé est réalisé lors de l'installation du module d'éclairage dans le véhicule automobile, ou lors d'un appairage entre le module de commande du véhicule automobile d'une part, et le module d'éclairage d'autre part. Les aspects de l'invention permettent en outre de produire un faisceau lumineux homogène et conforme à une consigne prédéterminée, indépendamment de l'instance de la source lumineuse matricielle implantée dans le module d'éclairage. Pour y arriver, en accord avec des aspects de l'invention il est proposé que les paramètres de calibrage soient stockés sur une mémoire fixée au module d'éclairage, lesdits paramètres comprenant par exemple des valeurs de correction de luminosité ou de courant électrique pour chaque pixel d'une source matricielle, ou des corrections de géométrie du faisceau produit par le module lumineux. De la sorte, on assure que les données associées au module lui sont physiquement jointes, notamment au moment de l'appairage du module d'éclairage avec le véhicule automobile. Cela permet d'éviter une étape supplémentaire de paramétrage pouvant susciter des erreurs lors de l'assemblage d'un projecteur de véhicule utilisant le module de d'éclairage. En utilisant les mesures de l'invention, un assemblage ou un changement de module peut être réalisé sans manipulation logicielle : par exemple, il n'y a pas besoin de transférer ou mettre à jour des données relatives au module dans une mémoire du contrôleur du véhicule automobile.

D'autres caractéristiques et avantages de la présente invention seront mieux compris à l'aide de la description des exemples et des dessins parmi lesquels :
- la [Fig. 1] montre la séquence des étapes principales d'un procédé en accord avec un mode de réalisation préférentiel de l'invention ;
- la [Fig. 2] est une illustration d'un système d'éclairage en accord avec un mode de réalisation préférentiel de l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre d'exemples et de manière non limitative.

La description se concentre sur les éléments d'un module d'éclairage pour un véhicule automobile qui sont nécessaires à la compréhension de l'invention. D'autres éléments, qui font de manière connue partie de tels modules, ne seront pas mentionnées ni décrits en détails. Par exemple, la présence et le fonctionnement d'un circuit convertisseur impliqué l'alimentation électrique d'une source lumineuse matricielle, en soi connu, ne sera pas décrit en détails. Il en va de même pour des éléments optiques tels que des lentilles par exemple.

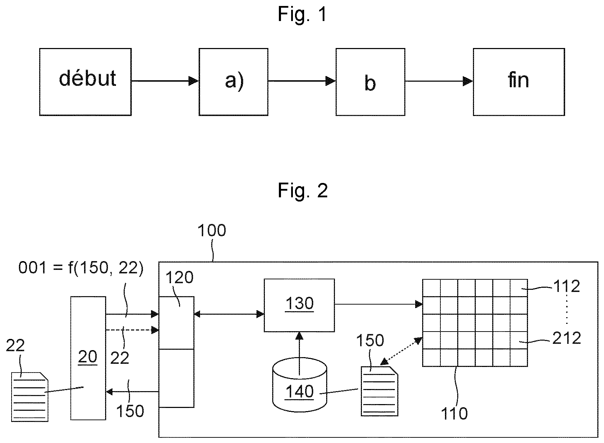

L'illustration de la figure 1 montre la séquence des étapes principales du procédé selon un mode de réalisation préférentiel du premier aspect de l'invention, tel que représenté par la première revendication. La figure 2 montre de manière non limitative un système d'éclairage pour un véhicule automobile qui permet la réalisation de ce procédé. Le procédé concerne la génération d'une image par défaut et il fait de préférence partie d'une séquence d'appairage entre le véhicule automobile et un module d'éclairage. Le système comprend notamment un module d'éclairage 100. Le module comprend une source lumineuse matricielle 110 regroupant une pluralité de sources lumineuses élémentaires 112. Dans l'exemple illustré, il s'agit d'une matrice de LEDs sans pour autant que l'invention ne soit limitée à cet exemple. La source lumineuse matricielle peut également être réalisée par un dispositif à micro-miroirs, pour lequel chaque miroir est adapté à générer un faisceau lumineux élémentaire d'une matrice. Le module comprend une unité de réception et d'envoi de données 120, il s'agit par exemple d'une interface capable de recevoir et décoder des messages sur un bus de données interne au véhicule automobile, tel qu'un bus de type CAN (« Controller Area Network »).

L'unité de réception données 120 est apte à recevoir/envoyer des données de/à au moins un module de commande du véhicule automobile. Le module de commande 20 comprend des données 22 relatives au véhicule automobile, tels que son assiette, la position du module d'éclairage dans le véhicule automobile, ou autres. Le module 100 comprend en outre un élément de mémoire 140, tel qu'une mémoire de type flash, auquel l'unité de commande 130 est fonctionnellement reliée et possède un accès en lecture, et dans lequel des données de calibration 150 propres à la source matricielle 112 sont enregistrées. A titre d'exemple les données peuvent comprendre pour chaque source lumineuse élémentaire 112 une valeur indiquant la différence de luminosité par rapport à la luminosité moyenne de la source matricielle 110, possiblement sur une gamme d'intensités de courant de charge. Les données 150 peuvent néanmoins comprendre des paramètres optiques ou géométriques de calibration plus complexes, sans pour autant sortir du cadre de la présente invention

L'échange des données entre le module lumineux 100 et le module de commande 20 du véhicule automobile à l'appairage des deux modules permet des applications intéressantes. Notamment, il est proposé de combiner des données relatives au véhicule 22, comme par exemple des paramètres d'orientation, de position, ou d'assiette du véhicule, ou encore des informations par rapport à des flux lumineux émis par d'autres projecteurs du véhicule, qui ne sont a priori disponibles uniquement au niveau du module de commande 20, avec les données de calibration 150, disponibles au niveau du module d'éclairage 100 et spécifiques à la source matricielle 110 embarquée dans celui-ci. Ces informations sont utilisées, selon un mode de réalisation préférentiel mais de manière non-limitative par le module de commande 20 du véhicule automobile pour générer une consigne ou image par défaut 001. Pour ce faire, la partie pertinente des données de calibration 150 est d'abord transmise du module d'éclairage 100 en direction du module de commande 20, comme indiqué par la flèche en trait continu de la Figure 2. En effet, le module de commande du véhicule automobile présente en général une capacité de calcul accrue par rapport à l'unité de commande 130 du module d'éclairage.

Alternativement, ce calcul peut être réalisé par l'unité de commande 130 du module d'éclairage après un échange correspondant des données 22 requises pour ce calcul entre l'unité de commande du véhicule automobile d'une part, et l'unité de commande du module d'éclairage d'autre part, représenté par la flèche en pointillées de la figure 2.

Une image par défaut est une image qui est projetée par le module lorsqu'un défaut ou une panne est détecté. Ainsi, le module peut de préférence comprendre un circuit électronique de détection d'erreur non-illustré, ou un microprocesseur programmé à cet effet par un programme informatique approprié. Le circuit de détection d'erreur est configuré pour détecter par exemple que les données reçues par le module de commande du véhicule automobile sont incohérentes, ou que la connexion entre le module de commande du véhicule automobile et le module d'éclairage 100 n'est plus fiable. Suite à cette détection d'erreur, l'image par défaut 001, est projetée à la place de l'image de consigne actuelle, dans le but d'éviter l'éblouissement potentiel d'autres usagers de la route. L'image par défaut est générée pour prendre en compte les spécificités de la source lumineuse matricielle 110 d'une part, et du véhicule qu'elle équipe de l'autre part. Ainsi l'image par défaut peut par exemple être générée de manière précise et automatique pour chaque véhicule automobile et chaque module d'éclairage qui l'équipe. De préférence, l'image par défaut résultante de ce procédé est transmise vers le module d'éclairage, qui la stocke de manière permanente dans un élément de mémoire dédié. En cas de défaillance de la communication entre le module de commande 20 du véhicule automobile et le module d'éclairage 100, la consigne par défaut sert alors de commande à la source lumineuse matricielle. L'image ou consigne par défaut peut par exemple correspondre à un éclairage de feu de croisement. En particulier, cette image peut correspondre à une coupure de feu de croisement. En effet la coupure doit être bien définie pour satisfaire la réglementation en vigueur. Le génération précise de la consigne par défaut, prenant en compte tous les paramètres décrits, permet notamment d'éviter que d'autres usagers de la route soient éblouis lorsque la consigne par défaut est projetée par le module d'éclairage.

Selon un mode de réalisation préférentiel, en absence de défaut et suite à l'appairage entre le véhicule automobile et le module d'éclairage, le module de commande 20 peut par exemple envoyer une consigne d'allumage au module d'éclairage 100, qui est chargée de commander la source lumineuse matricielle en fonction de la consigne reçue. Une telle consigne peut par exemple comprendre une valeur de luminosité, tel qu'un niveau de gris, encodée sur un nombre prédéterminé de bits et à réaliser par chacune des sources lumineuses élémentaires 112. La consigne d'allumage peut donc être une image digitale, et elle peut en particulier être une trame d'un flux de telles images, constituant un signal vidéo. L'unité de commande 130 est destinée à commander ladite source lumineuse matricielle en fonction de ladite consigne d'éclairage. L'unité de commande peut être reliée à, ou comprendre, un circuit de pilotage de l'alimentation électrique des sources lumineuses élémentaires 112, qui est commandé pour alimenter les sources lumineuses élémentaires de manière à réaliser la consigne d'éclairage.

Afin de garantir une intensité lumineuse homogène, l'unité de commande 130 ajuste les valeurs de consigne reçues par le module de commande 20 en y additionnant ou retranchant les différences respectives décrites dans les données de calibration 150, avant de commander les sources lumineuses élémentaires en accord avec le résultat. Les données 150 peuvent néanmoins comprendre des paramètres optiques ou géométriques de calibration plus complexes, sans pour autant sortir du cadre de la présente invention. Dans un tel cas, au lieu d'agir uniquement au niveau de chaque source lumineuse ou de chaque pixel de manière individuelle, la correction de la consigne d'origine peut avantageusement engendrer une correction au niveau de toute la consigne, i.e. de toute l'image à projeter, ou au niveau d'au moins une partie ou zone de cette image. Par exemple, l'image projetée sans la correction de consigne pourrait présenter une allure courbée concave due à l'optique de projection aux abords de la zone de projection. La réalisation de la consigne précorrigée, qui prend en compte les données de calibration y compris la déformation géométrique infligée par l'optique de projection, résulte dans une image projetée présentant une géométrie plus proche de la géométrie non-courbée désirée. Pour appliquer une correction des aberrations géométriques, il est utile d'appliquer une déformation à toute l'image de consigne d'origine. Comme celle-ci est discrétisée, cette déformation provoque une dégradation de l'information contenue dans l'image initiale. Il est donc avantageux que l'image de cosigne transmise depuis l'unité de commande du véhicule vers l'unité de commande soit d'une résolution supérieure à la résolution de projection du module lumineux.

L'unité de commande 130 comprend un élément microcontrôleur ayant une puissance de calcul suffisante pour corriger la consigne 10, ou bien un flux de consignes, en temps réel, en y appliquant les données de calibration 150.

Selon un mode de réalisation préférentiel de l'invention, le module d'éclairage est agencé pour transmettre au moins une partie des données de calibration 150, et de préférence l'intégralité de ces données, vers le module de commande 20. Ceci est par exemple réalisé lors d'une phase d'initialisation du module d'éclairage. Afin de garantir une intensité lumineuse homogène, le module de commande 20 prend en compte les valeurs de calibration 150 ainsi reçues pour déterminer l'image de consigne. Par exemple, le module de commande 20 ajuste les valeurs de consigne en y additionnant ou retranchant les différences respectives, avant de transmettre le résultat au module d'éclairage 100. Les données 150 peuvent néanmoins comprendre des paramètres optiques ou géométriques de calibration plus complexes, sans pour autant sortir du cadre de la présente invention. Dans ce mode de réalisation l'unité de commande1230 est libérée de la tâche de correction de la consigne, et elle peut être réalisée par un élément microcontrôleur moins onéreux et présentant une moindre puissance de calcul.

L'échange de données entre le module de commande 20 du véhicule automobile et le module d'éclairage 100 précédemment définis permet également d'ajouter une fonction d'authentification entre les deux modules 20 et 100 respectivement.

Il est à noter que cette fonction d'authentification peut également être mise en œuvre indépendamment de la fonction de calibrage et/ou de l'échange de données de calibration/assiette et sans la présence de l'élément de mémoire 140 au niveau du module d'éclairage 200.

La fonction d'authentification peut par exemple comprendre l'échange de clés cryptographiques publiques entre les deux modules en question, permettant ainsi la vérification par l'un et l'autre de l'authenticité de données signées moyennant les clés cryptographique privées correspondantes. Alternativement ou cumulativement, l'unité de commande 130 du module d'éclairage 100 envoie un accusé de réception vers le module de commande 20 pour un paquet de données reçu, l'accusé de réception comportant une partie permettant d'authentifier le microcontrôleur. Le paquet de données peut par exemple contenir des données de calibration, et/ou des données d'images par défaut et/ou des données pour générer une image par défaut et/ou tout ou partie d'une image et/ou d'un groupe d'images, et/ou un paquet d'un flux vidéo compressé. Dans un mode de réalisation préférentiel, cette authentification n'est pas réalisée sur tous les paquets. De la sorte, la charge de calcul correspondante est allégée et lissée dans le temps. Encore alternativement, la fonction d'authentification peut comprendre l'envoi, du module de commande 20 du véhicule automobile vers l'unité de commande 130 du module d'éclairage, d'un entête pour un paquet de données envoyé, l'entête comportant une partie permettant d'authentifier le module de commande 20, le paquet de données étant du même type que précédemment défini. Avantageusement cette authentification n'est pas réalisée sur tous les paquets. De la sorte, la charge de calcul correspondante est allégée et lissée dans le temps.

Afin de réaliser la fonction d'authentification, le module d'éclairage 100 ainsi que le module de commande 20 du véhicule automobile comprennent des moyens de calcul pour générer l'entête respectivement l'accusé de réception servant à l'authentification. De préférence, la génération est faite en fonction
d'un temps ou d'une date, pouvant être exprimé en une unité de temps quelconque, par exemple en millisecondes, ou
d'un compteur comptant des échanges ou des cycles de calcul, ou
d'un autre élément qui évolue avec le nombre d'échanges, pouvant être réinitialisé lorsque qu'il dépasse une taille prédéfinie.

Dans le cas où l'authentification entre le contrôleur et le microcontrôleur échoue, la fonction d'éclairage peut être mise dans un mode de défaillance de la communication. Avantageusement, le mode de défaillance n'est activé que lorsque des échecs de l'authentification sont répétés, ce qui permet d'éviter d'activer le mode de défaillance si la liaison a été perturbée, par exemple par des perturbations électromagnétiques passagères, ce qui est en particulier avantageux dans le cas d'une fonction d'authentification utilisant des entêtes ou des accusés de réception.

Dans le cas où l'unité de commande 130 comprend un calculateur, il peut implémenter une fonction de chiffrage des échanges de données, dans laquelle des données chiffrées par le module de commande 20 du véhicule automobile sont déchiffrées par le calculateur. Avantageusement, le calculateur dispose d'une méthode pour déterminer si le flux n'est pas décodé correctement. Si le flux n'est pas décodé correctement, le calculateur peut passer dans un mode de défaillance de la communication. Le mode de défaillance de la communication peut impliquer les procédures suivantes, prises seules ou en combinaison :
- l'arrêt de la fonction d'éclairage ou la projection par le module d'éclairage d'une image par défaut,
- la génération par le module de commande 20 d'un signal de défaillance émis vers un système central de gestion de l'automobile,
- le passage du calculateur dans un mode d'authentification où le calculateur continue à lancer une procédure d'authentification auprès du calculateur du module de commande 20 (ou vice-versa). Dans le mode d'authentification, l'envoi des paquets de données peut être interrompu.

Il va de soi que les modes de réalisation décrits ne limitent pas l'étendue de la protection de l'invention. En faisant recours à la description qui vient d'être donnée, d'autres modes de réalisation sont envisageables sans pour autant sortir du cadre de la présente invention.

L'étendue de la protection est déterminée par les revendications.

## Revendications

1. Procédé de génération d'une consigne d'éclairage par défaut (001) d'un module d'éclairage (100) pour un véhicule automobile, le module d'éclairage comprenant une source lumineuse matricielle (110) regroupant une pluralité de sources lumineuses élémentaires (112), une unité de réception et d'envoi de données (120) pour recevoir/envoyer des données d'un/à un module de commande (20) du véhicule automobile, le module de commande (20) comprenant des premières données (22) relatives au véhicule automobile, le module d'éclairage comprenant en outre une unité de commande (130) destinée à commander ladite source lumineuse matricielle, et un élément de mémoire (140) comprenant des secondes données de calibration (150) relatives à ladite source lumineuse matricielle, **caractérisé en ce que** la consigne par défaut est destinée à servir de commande à la source lumineuse matricielle en cas de défaillance de la communication entre le module de commande (20) du véhicule automobile et le module d'éclairage (100), et **en ce que** le procédé comprend les étapes de
a) calculer, moyennant une unité de calcul, une consigne d'éclairage par défaut, en utilisant au moins une partie desdites premières données et au moins une partie desdites secondes données ;
b) enregistrer la consigne d'éclairage par défaut dans un élément de mémoire du module d'éclairage.

2. Procédé selon la revendication précédente, **caractérisé en ce qu'**il comprend l'étape préliminaire d'envoyer au moins une partie des secondes données de calibration (150) moyennant l'unité d'envoi de données (120) au module de commande (20) du véhicule automobile, **en ce que** l'unité de calcul fait partie dudit module de commande (20), et **en ce que** le procédé comprend en outre avant l'étape b) la transmission de la consigne d'éclairage par défaut du module de commande (20) au module d'éclairage (100).

3. Procédé selon la revendication précédente, **caractérisé en ce qu'**il comprend l'étape d'enregistrer, au niveau du module de commande (20), les secondes données de calibration (150) reçues dans un élément de mémoire, afin de les réutiliser ultérieurement.

4. Procédé selon l'une des revendications précédentes, **caractérisé en ce qu'**il comprend une étape ultérieure d'envoi d'une consigne d'éclairage du module de commande (20) au module d'éclairage (100), la consigne d'éclairage transmise prenant en compte lesdites données de calibration (150).

5. Procédé selon la revendication 1, **caractérisé en ce qu'**il comprend l'étape préliminaire de recevoir au moins une partie des premières données (22) relatives au véhicule automobile moyennant l'unité de réception de données (120) depuis le module de commande (20) du véhicule automobile, et **en ce que** l'unité de calcul est fait partie dudit module d'éclairage.

6. Procédé selon la revendication précédente, **caractérisé en ce qu'**il comprend une étape ultérieure de réception d'une consigne d'éclairage de la part du module de commande (20) au niveau du module d'éclairage, et une étape de commander, moyennant l'unité de commande (130) du module d'éclairage (100), la source lumineuse matricielle (110) en fonction de ladite consigne d'éclairage et des données de calibration (150) stockées dans l'élément de mémoire (140) du module.

7. Procédé selon la revendication précédente, **caractérisé en ce qu'**il comprend une étape de correction de la consigne d'éclairage reçue, en utilisant les données de calibration (150) stockées dans l'élément de mémoire (140) du module d'éclairage.

8. Procédé selon l'une des revendications précédentes, **caractérisé en ce qu'**il comprend une étape ultérieure de détection, moyennant une unité de détection, d'un défaut au niveau du module de commande (20) et/ou au niveau du module d'éclairage (100), et de commande de la source matricielle par la suite en utilisant ladite consigne par défaut (001).

9. Procédé selon l'une des revendications précédentes, **caractérisé en ce que** les premières données (22) relatives au véhicule automobile comprennent des données qui décrivent l'assiette, la position du module d'éclairage, la position d'autres modules d'éclairage, ou une combinaison de ce qui précède.

10. Procédé selon l'une des revendications précédentes, **caractérisé en ce que** les secondes données de calibration (150) comprennent pour chaque source élémentaire une indication de l'intensité lumineuse émise en fonction d'un courant électrique de charge, une indication d'une aberration géométrique d'un faisceau lumineux que le module d'éclairage (100) est apte à émettre, ou une combinaison de ce qui précède.

11. Procédé selon l'une des revendications précédentes, **caractérisé en ce que** la consigne d'éclairage par défaut (001) comprend une image qui représente une coupure de feu de croisement.

12. Procédé selon l'une des revendications précédentes, **caractérisé en ce qu'**au moins une partie des données échangées entre le module de commande (20) du véhicule automobile et l'unité de commande (130) du module d'éclairage (100) est chiffrée et/ou signée moyennant au moins une clé cryptographique.

13. Procédé de commande selon la revendication précédente, **caractérisé en ce qu'**une défaillance au niveau du module d'éclairage (100) et/ou du module de commande (20) du véhicule automobile est détectée lorsque le déchiffrage des données n'aboutit pas ou lorsque ladite signature ne peut pas être validée.

14. Système d'éclairage pour un véhicule automobile, **caractérisé en ce que** le système comprend un module de commande (20) d'un véhicule automobile, le module de commande (20) comprenant des premières données (22) relatives au véhicule automobile, le module de commande (20) étant relié par un canal de données à un module d'éclairage qui comprend une unité de commande (130) et une source lumineuse matricielle (110) ainsi qu'un élément de mémoire (140) comprenant des secondes données de calibration (150) relatives à ladite source lumineuse matricielle (110), et **caractérisé en ce que** le module de commande (20) et le module d'éclairage (100) sont configurés pour mettre en œuvre les étapes du procédé selon l'une des revendications précédentes.

## Patentansprüche

1. Verfahren zur Erzeugung einer Standard-Beleuchtungsanweisung (001) für ein Beleuchtungsmodul (100) für ein Kraftfahrzeug, wobei das Beleuchtungsmodul eine Matrix-Lichtquelle (110) umfasst, die eine Vielzahl von elementaren Lichtquellen (112) gruppiert, eine Datenempfangs- und -sendeeinheit (120) zum Empfangen/Senden von Daten von/zu einem Steuerungsmodul (20) des Kraftfahrzeugs, wobei das Steuerungsmodul (20) erste Daten (22) bezüglich des Kraftfahrzeugs umfasst, wobei das Beleuchtungsmodul ferner eine Steuerungseinheit (130) umfasst, die dazu bestimmt ist, die besagte Matrix-Lichtquelle zu steuern, und ein Speicherelement (140), das zweite Kalibrierungsdaten (150) bezüglich der besagten Matrix-Lichtquelle umfasst, **dadurch gekennzeichnet, dass** die Standardanweisung dazu bestimmt ist, im Falle eines Kommunikationsausfalls zwischen dem Steuerungsmodul (20) des Kraftfahrzeugs und dem Beleuchtungsmodul (100), als Befehl für die Matrix-Lichtquelle zu dienen, und **dadurch gekennzeichnet, dass** das Verfahren die Schritte umfasst:
a) Berechnen, mittels einer Berechnungseinheit, einer Standard-Beleuchtungsanweisung unter Verwendung mindestens eines Teils der besagten ersten Daten und mindestens eines Teils der besagten zweiten Daten;
b) Speichern der Standard-Beleuchtungsanweisung in einem Speicherelement des Beleuchtungsmoduls.

2. Verfahren nach dem vorhergehenden Anspruch, **dadurch gekennzeichnet, dass** es den vorbereitenden Schritt des Sendens mindestens eines Teils der zweiten Kalibrierungsdaten (150) mittels der Datenübertragungseinheit (120) an das Steuerungsmodul (20) des Kraftfahrzeugs umfasst, **dadurch gekennzeichnet, dass** die Berechnungseinheit Teil des besagten Steuerungsmoduls (20) ist, und **dadurch gekennzeichnet, dass** das Verfahren ferner vor Schritt b) die Übertragung der Standard-Beleuchtungsanweisung vom Steuerungsmodul (20) an das Beleuchtungsmodul (100) umfasst.

3. Verfahren nach dem vorhergehenden Anspruch, **dadurch gekennzeichnet, dass** es den Schritt des Speicherns der empfangenen zweiten Kalibrierungsdaten (150) auf Ebene des Steuerungsmoduls (20) in einem Speicherelement umfasst, um sie später wiederzuverwenden.

4. Verfahren nach einem der vorhergehenden Ansprüche, **dadurch gekennzeichnet, dass** es einen nachfolgenden Schritt des Sendens einer Beleuchtungsanweisung vom Steuerungsmodul (20) an das Beleuchtungsmodul (100) umfasst, wobei die übertragene Beleuchtungsanweisung die besagten Kalibrierungsdaten (150) berücksichtigt.

5. Verfahren nach Anspruch 1, **dadurch gekennzeichnet, dass** es den vorbereitenden Schritt des Empfangens mindestens eines Teils der ersten Daten (22) bezüglich des Kraftfahrzeugs mittels der Datenempfangseinheit (120) vom Steuerungsmodul (20) des Kraftfahrzeugs umfasst, und **dadurch gekennzeichnet, dass** die Berechnungseinheit Teil des besagten Beleuchtungsmoduls ist.

6. Verfahren nach dem vorhergehenden Anspruch, **dadurch gekennzeichnet, dass** es einen nachfolgenden Schritt des Empfangens einer Beleuchtungsanweisung vom Steuerungsmodul (20) auf Ebene des Beleuchtungsmoduls und einen Schritt des Steuerns, mittels der Steuerungseinheit (130) des Beleuchtungsmoduls (100), der Matrix-Lichtquelle (110) in Abhängigkeit von der besagten Beleuchtungsanweisung und den im Speicherelement (140) des Moduls gespeicherten Kalibrierungsdaten (150) umfasst.

7. Verfahren nach dem vorhergehenden Anspruch, **dadurch gekennzeichnet, dass** es einen Schritt der Korrektur der empfangenen Beleuchtungsanweisung unter Verwendung der im Speicherelement (140) des Beleuchtungsmoduls gespeicherten Kalibrierungsdaten (150) umfasst.

8. Verfahren nach einem der vorhergehenden Ansprüche, **dadurch gekennzeichnet, dass** es einen nachfolgenden Schritt der Erkennung, mittels einer Erkennungseinheit, eines Fehlers auf Ebene des Steuerungsmoduls (20) und/oder auf Ebene des Beleuchtungsmoduls (100) und der anschließenden Steuerung der Matrixquelle unter Verwendung der besagten Standardanweisung (001) umfasst.

9. Verfahren nach einem der vorhergehenden Ansprüche, **dadurch gekennzeichnet, dass** die ersten Daten (22) bezüglich des Kraftfahrzeugs Daten umfassen, die die Lage, die Position des Beleuchtungsmoduls, die Position anderer Beleuchtungsmodule oder eine Kombination davon beschreiben.

10. Verfahren nach einem der vorhergehenden Ansprüche, **dadurch gekennzeichnet, dass** die zweiten Kalibrierungsdaten (150) für jede elementare Quelle eine Angabe der emittierten Lichtintensität in Abhängigkeit von einem elektrischen Ladestrom, eine Angabe einer geometrischen Aberration eines Lichtstrahls, den das Beleuchtungsmodul (100) emittieren kann, oder eine Kombination davon umfassen.

11. Verfahren nach einem der vorhergehenden Ansprüche, **dadurch gekennzeichnet, dass** die Standard-Beleuchtungsanweisung (001) ein Bild umfasst, das eine Abblendlicht-Hell-Dunkel-Grenze darstellt.

12. Verfahren nach einem der vorhergehenden Ansprüche, **dadurch gekennzeichnet, dass** mindestens ein Teil der zwischen dem Steuerungsmodul (20) des Kraftfahrzeugs und der Steuerungseinheit (130) des Beleuchtungsmoduls (100) ausgetauschten Daten mittels mindestens eines kryptografischen Schlüssels verschlüsselt und/oder signiert ist.

13. Verfahren zur Steuerung nach dem vorhergehenden Anspruch, **dadurch gekennzeichnet, dass** ein Ausfall auf Ebene des Beleuchtungsmoduls (100) und/oder des Steuerungsmoduls (20) des Kraftfahrzeugs erkannt wird, wenn die Entschlüsselung der Daten fehlschlägt oder wenn die besagte Signatur nicht validiert werden kann.

14. Beleuchtungssystem für ein Kraftfahrzeug, **dadurch gekennzeichnet, dass** das System ein Steuerungsmodul (20) eines Kraftfahrzeugs umfasst, wobei das Steuerungsmodul (20) erste Daten (22) bezüglich des Kraftfahrzeugs umfasst, wobei das Steuerungsmodul (20) über einen Datenkanal mit einem Beleuchtungsmodul verbunden ist, das eine Steuerungseinheit (130) und eine Matrix-Lichtquelle (110) sowie ein Speicherelement (140) umfasst, das zweite Kalibrierungsdaten (150) bezüglich der besagten Matrix-Lichtquelle (110) umfasst, und **dadurch gekennzeichnet, dass** das Steuerungsmodul (20) und das Beleuchtungsmodul (100) so konfiguriert sind, dass sie die Schritte des Verfahrens nach einem der vorhergehenden Ansprüche ausführen.

## Claims

1. Method for generating a default lighting instruction (001) for a lighting module (100) for a motor vehicle, the lighting module comprising a matrix light source (110) grouping together a plurality of elementary light sources (112), a data reception and transmission unit (120) for receiving/sending data from/to a control module (20) of the motor vehicle, the control module (20) comprising first data (22) relating to the motor vehicle, the lighting module further comprising a control unit (130) intended to control said matrix light source, and a memory element (140) comprising second calibration data (150) relating to said matrix light source, **characterized in that** the default instruction is intended to serve as a command for the matrix light source in case of communication failure between the control module (20) of the motor vehicle and the lighting module (100), and **in that** the method comprises the steps of
a) calculating, by means of a calculation unit, a default lighting instruction, using at least a part of said first data and at least a part of said second data;
b) recording the default lighting instruction in a memory element of the lighting module.

2. Method according to the preceding claim, **characterized in that** it comprises the preliminary step of sending at least a part of the second calibration data (150) by means of the data transmission unit (120) to the control module (20) of the motor vehicle, **in that** the calculation unit is part of said control module (20), and **in that** the method further comprises, before step b), the transmission of the default lighting instruction from the control module (20) to the lighting module (100).

3. Method according to the preceding claim, **characterized in that** it comprises the step of recording, at the level of the control module (20), the received second calibration data (150) in a memory element, in order to reuse them later.

4. Method according to one of the preceding claims, **characterized in that** it comprises a subsequent step of sending a lighting instruction from the control module (20) to the lighting module (100), the transmitted lighting instruction taking into account said calibration data (150).

5. Method according to claim 1, **characterized in that** it comprises the preliminary step of receiving at least a part of the first data (22) relating to the motor vehicle by means of the data reception unit (120) from the control module (20) of the motor vehicle, and **in that** the calculation unit is part of said lighting module.

6. Method according to the preceding claim, **characterized in that** it comprises a subsequent step of receiving a lighting instruction from the control module (20) at the level of the lighting module, and a step of controlling, by means of the control unit (130) of the lighting module (100), the matrix light source (110) according to said lighting instruction and the calibration data (150) stored in the memory element (140) of the module.

7. Method according to the preceding claim, **characterized in that** it comprises a step of correcting the received lighting instruction, using the calibration data (150) stored in the memory element (140) of the lighting module.

8. Method according to one of the preceding claims, **characterized in that** it comprises a subsequent step of detecting, by means of a detection unit, a fault at the level of the control module (20) and/or at the level of the lighting module (100), and of controlling the matrix source subsequently using said default instruction (001).

9. Method according to one of the preceding claims, **characterized in that** the first data (22) relating to the motor vehicle comprise data describing the attitude, the position of the lighting module, the position of other lighting modules, or a combination thereof.

10. Method according to one of the preceding claims, **characterized in that** the second calibration data (150) comprise for each elementary source an indication of the luminous intensity emitted as a function of an electric charge current, an indication of a geometric aberration of a light beam that the lighting module (100) is capable of emitting, or a combination thereof.

11. Method according to one of the preceding claims, **characterized in that** the default lighting instruction (001) comprises an image representing a dipped beam cutoff.

12. Method according to one of the preceding claims, **characterized in that** at least a part of the data exchanged between the control module (20) of the motor vehicle and the control unit (130) of the lighting module (100) is encrypted and/or signed by means of at least one cryptographic key.

13. Method of control according to the preceding claim, **characterized in that** a failure at the level of the lighting module (100) and/or the control module (20) of the motor vehicle is detected when the decryption of the data fails or when said signature cannot be validated.

14. Lighting system for a motor vehicle, **characterized in that** the system comprises a control module (20) of a motor vehicle, the control module (20) comprising first data (22) relating to the motor vehicle, the control module (20) being connected by a data channel to a lighting module which comprises a control unit (130) and a matrix light source (110) as well as a memory element (140) comprising second calibration data (150) relating to said matrix light source (110), and **characterized in that** the control module (20) and the lighting module (100) are configured to implement the steps of the method according to one of the preceding claims.
